# EUROPÄISCHE PATENTSCHRIFT

(11) **EP 4 312 009 B1**
(45) Veröffentlichungstag und Bekanntmachung des Hinweises auf die Patenterteilung: **25.12.2024**
(21) Anmeldenummer: 22187362.3
(22) Anmeldetag: 28.07.2022
(51) Int. Cl.: G01K 7/18, H01C 1/014, H01C 1/144, H01C 7/02, H01C 17/02, H01C 17/22, H01C 17/23, H01C 17/24

(54) **ANISOTROPE LEITFÄHIGE KLEBEVERBINDUNGEN FÜR EINEN RTD**
ANISOTROPIC CONDUCTIVE ADHESIVE COMPOSITIONS FOR AN RTD
LIAISONS ADHÉSIVES CONDUCTRICES ANISOTROPES POUR UN RTD

(43) Veröffentlichungstag der Anmeldung: 31.01.2024
(73) Patentinhaber: Yageo Nexensos GmbH, 63801 Kleinostheim (DE)
(72) Erfinder: Nick, Christoph, 63801 Kleinostheim (DE); Asmus, Tim, 63801 Kleinostheim (DE); Schwappach, Bastian, 63801 Kleinostheim (DE); Girschikofsky, Maiko, 63801 Kleinostheim (DE); Falter, Martina, 63801 Kleinostheim (DE); Loose, Thomas, 63801 Kleinostheim (DE)
(74) Vertreter: Meissner Bolte Partnerschaft mbB

(56) Entgegenhaltungen:
- EP-A1- 3 789 745
- WO-A1-2021/220540
- US-A1- 2020 240 852

## Beschreibung

Die Erfindung betrifft ein Sensorelement aufweisend einen Sensorchip und ein anisotrop leitfähiges Material, wobei das anisotrop leitfähige Material eine Trimmstruktur des Sensorchips bedeckt, sowie ein Sensormodul enthaltend das Sensorelement und ein Verfahren zur Herstellung des Sensormoduls.

Im Stand der Technik sind Widerstandssensoren, z.B. aus Platin, seit langem bekannt. Solche Widerstandssensoren weisen eine temperaturempfindliche Widerstandsstruktur auf, die auf einem elektrisch isolierenden Träger angeordnet ist. Die Widerstandsstruktur wird dabei über Kontaktpads kontaktiert. Üblicher Weise werden die Sensoren mit einem genau definierten Nennwiderstand und Temperaturkoeffizienten verkauft. Sensoren mit derart definierten Nennwiderständen lassen sich jedoch nur schwer direkt herstellen. Da die Widerstandsstruktur durch das Herstellverfahren beeinflusst wird, weisen die Widerstände der roh gefertigten Sensoren ein gewisse Schwankungsbreite auf. Um die Sensoren möglichst exakt auf den Nennwiderstand einzustellen, werden die Sensoren meist mit einem etwas niedrigeren Widerstand als dem Nennwiderstand gefertigt und anschließend durch Erhöhen des Widerstands auf den Nennwiderstand eingestellt. Das Einstellen des Widerstands der Widerstandsstruktur auf einen Nennwiderstand wird auch Trimmen genannt. Dazu kann der Widerstand der Sensorstruktur in einem speziell dafür vorgesehenen Trimmbereich nachträglich verändert werden, indem die Strecke der Leiterbahn verlängert wird oder Parallelwiderstände aufgetrennt werden. Dadurch erhöht sich der Widerstand. Der Trimmvorgang wird im Stand der Technik häufig durch Entfernen eines Teils der Leiterbahnstruktur in den Trimmbereichen durch Materialbearbeitung mit Laserstrahlung realisiert. Damit die Leiterbahn im Trimmbereich vor Umwelteinflüssen geschützt ist, muss der Trimmbereich nach dem Trimmen verschlossen werden. Dies geschieht üblicher Weise, indem der Trimmbereich nachträglich mit einer elektrisch isotrop isolierenden Abdeckschicht aus Glas, Keramik, Glaskeramik oder einem Polymer verschlossen wird. Nachteilig daran ist, dass insbesondere beim Auftragen und Einbrennen von Gläsern, Keramiken oder Glaskeramiken der Widerstand der bereits getrimmten Widerstandsstruktur wieder verändert werden kann. EP 3 789 745 A1 is ein Beispiel eines Widerstandssensors gemäß dem Stand der Technik.

Wünschenswert wäre es, wenn auf das Aufbringen einer solchen Abdeckschicht nach dem Trimmen verzichtet werden könnte, bevor der Sensor in seiner Endanwendung eingebaut wird.

Weiterhin gibt es bei Sensoren, insbesondere bei Widerstandssensoren, einen Trend zur Miniaturisierung. Solche miniaturisierten Sensoren können mit sehr wenig Platzbedarf z.B. auf Platinen in der Halbleiterindustrie montiert werden. Dabei stoßen herkömmliche Aufbau- und Verbindungstechniken an ihre Grenzen. Üblicher Weise werden Widerstandssensoren, insbesondere in Form von oberflächenmontierbaren Bauteilen (surface mounted devices, SMD), durch Löten auf den Leiterbahnen eines Substrats, z.B. einer gedruckten Leiterplatte *(printed circuit board,* PCB), befestigt. Bei sehr kleinen Sensoren kann es jedoch zu einem Überlöten kommen, sodass es zu Kurzschlüssen zwischen Kontakten kommt. Wünschenswert ist es, wenn Widerstandssensoren, insbesondere miniaturisierte Widerstandssensoren so auf Substraten befestigt werden können, dass die Gefahr von Kurzschlüssen reduziert wird.

Es war eine Aufgabe der Erfindung ein Sensorelement bereitzustellen, bei dem auf ein dezidiertes Verschließen der Trimmstruktur z.B. mit einer Glasschicht oder einer keramischen Schicht verzichtet werden kann. Insbesondere war es eine Aufgabe der Erfindung ein Sensorelement bereitzustellen, bei dem das Verschließen der Trimmstruktur, bzw. einer Trimmstelle, nicht vor dem Einbau eines Sensorchips in ein Sensormodul realisiert werden muss.

Eine weitere bevorzugte Aufgabe bestand darin ein Sensorelement bereitzustellen, das einfach auf einem Substrat mit eng nebeneinander liegenden Leiterstrukturen befestigt werden kann.

Eine weitere Aufgabe der Erfindung bestand darin, ein vereinfachtes Verfahren zur Herstellung eines Sensormoduls bereitzustellen, insbesondere für ein Sensormodul enthaltend einen miniaturisierten Sensorchip, der mit eng beieinanderliegenden Leiterstrukturen kontaktiert wird. Dabei sollte insbesondere die Gefahr von Kurzschlüssen verringert werden.

Mindestens eine Aufgabe wird gelöst durch die Gegenstände der unabhängigen Ansprüche. Die Gegenstände der abhängigen Ansprüche stellen bevorzugte Ausführungsformen der Erfindung dar.

Erfindungsgemäß betrifft die Erfindung ein Sensorelement aufweisend einen Sensorchip und ein anisotrop leitfähiges Material, wobei der Sensorchip aufweist,
a) einen elektrisch isolierenden Träger aufweisend eine erste Seite und eine der ersten Seite gegenüberliegende zweite Seite,
b) mindestens zwei Kontaktpads angeordnet auf der ersten Seite des elektrisch isolierenden Trägers und
c) eine Widerstandsstruktur auf der ersten Seite des elektrisch isolierenden Trägers, die sich von einem ersten Kontaktpad zu mindestens einem weiteren Kontaktpad erstreckt, wobei die Widerstandsstruktur mindestens eine Trimmstruktur enthält,
dadurch gekennzeichnet, dass auf der ersten Seite des elektrisch isolierenden Trägers, zumindest auf der mindestens einen Trimmstruktur ein anisotrop leitfähiges Material angeordnet ist. Das anisotrop leitfähige Material kann indirekt oder direkt auf der mindestens einen Trimmstruktur angeordnet sein.

Das Sensorelement weist einen Sensorchip und ein anisotrop leitfähiges Material auf. Das anisotrop leifähige Material ist somit vorzugsweise nicht Teil des Sensorchips. Der Sensorchip kann ein Widerstandsensor sein, insbesondere ein Widerstandstemperatursensor (RTD), mit einer metallischen Widerstandsstruktur. Der Widerstandssensor kann z.B. ein PTC sein. Die metallische Widerstandstruktur kann beispielsweise Platin, Palladium, Nickel, Aluminium oder ein anders Metall aufweisen oder daraus bestehen. Optional kann die metallische Widerstandsstruktur eine Legierung aufweisen oder daraus bestehen. In einer möglichen Ausführung kann die Legierung eine Aluminiumlegierung sein, z.B. eine Legierung die 0,5 - 2 Gew.-% Kupfer enthält.

In einer bevorzugten Ausführung handelt es sich bei dem Sensorchip um einen Temperatursensorchip. In einer anderen möglichen Ausführung handelt es sich bei dem Sensorchip um einen Dehnungsmesstreifen oder eine Drucksensor. In einer alternativen Ausführung kann es sich um einen Widerstandsheizer, insbesondere mit Mäanderstruktur, mit einem präzise eingestellten Widerstand handeln.

In einer weiteren bevorzugten Anwendung handelt es sich bei dem Sensorelement um ein komplexes System aus mehreren elektronischen Komponenten, die auf einem elektrisch isolierenden Träger angeordnet sind, enthaltend eine Widerstandsstruktur mit mindestens einer Trimmstruktur, wobei ein anisotrop leitfähiges Material die mindestens eine Trimmstruktur, vorzugsweise enthaltend eine Trimmstelle, bedeckt.

Besonders bevorzugt enthält die Widerstandsstruktur mindestens eine Trimmstruktur. Diese Trimmstruktur ist vorzugsweise durch Ablation, z.B. mittels Laserstrahlung, modifiziert, d.h. getrimmt, worden. Die Bereiche der mindestens einen Trimmstruktur, die modifiziert wurden, werden auch Trimmstellen genannt.

In einer besonders bevorzugten Ausführung kann der Sensorchip ein Sensor sein, wie er in WO2021047948A1 beschrieben ist, insbesondere in Form eines Temperatursensors. Ganz besonders bevorzugt ist der Sensorchip ein Sensorchip, wie er in den Figuren 1 und 2 der WO2021047948A1 mit der dazugehörigen Beschreibung offenbart ist.

Ein anisotrop leitfähiges Material umfasst vorzugsweise eine elektrisch isolierende Matrix, in der elektrisch leitfähige Partikel dispergiert sind. Im Kontext der Erfindung gehören zu leitfähigen Partikeln auch leitfähige Elemente, z.B. Zylinder, die fest in einer elektrisch isolierenden Matrix eingebettet sind und sich in einer Vorzugsrichtung durch das anisotrop leitfähige Material erstrecken. Die elektrisch isolierende Matrix umfasst vorzugsweise ein organisches Material oder sie besteht daraus.

Bevorzugt kann die elektrisch isolierende Matrix des anisotrop leitfähigen Materials ausgewählt sein aus organischen Polymeren, wie z.B. Epoxiden, und aus Silikonen. Ganz besonders bevorzugt enthält die elektrisch isolierende Matrix des anisotrop leitfähigen Materials ein Epoxid oder sie besteht daraus. Dem Fachmann für Aufbau- und Verbindungstechnik sind anisotrop leitfähige Materialien, insbesondere anisotrop leitfähige Kleber, grundsätzlich bekannt und diese sind kommerziell verfügbar. Er ist in der Lage geeignete Materialien auszuwählen und anzuwenden.

Unter anisotrop leitfähigen Materialien können insbesondere anisotrop leifähige Kleber, anisotrop leitfähige Filme oder Bänder verstanden werden. Anisotrop leitfähige Kleber und anisotrop leitfähige Filme enthalten vorzugsweise Polymere oder Polymervorläufer, die mit leitfähigen Partikeln gefüllt sind. Besonders bevorzugt sind die Polymere duroplastische Polymere, die durch Vernetzen eines Polymervorläufers oder eines Polymersystems erhalten werden können. Polymervorläufer können unter anderem Monomere oder Oligomere sein. Im Rahmen der Erfindung kann unter einem anisotrop leitfähigen Material sowohl ein Polymervorläufer als auch ausgehärtetes oder vernetztes Polymermaterial, z.B. eine Klebemasse, verstanden werden.

Das anisotrop leitfähige Material kann ausgewählt sein aus der Gruppe enthaltend anisotrop leitfähige Zwei-Komponenten-Kleber, anisotrop leitfähige Ein-Komponenten-Kleber, anisotrop leitfähige Schmelzkleber und anisotrop leitfähige Filme. Anisotrop leitfähige Filme können z.B. Klebebänder sein, die mit leitfähigen Partikeln, z.B Metallpartikeln, insbesondere Silberpartikeln, gefüllt sind. Das anisotrop leitfähige Material enthält vorteilhaft verformbare oder nicht-verformbare elektrisch leitfähige Partikel. Beispiele für verformbare Partikel sind Kohlenstoffpartikel, insbesondere Graphitpartikel. Der Füllgrad des anisotrop leitfähigen Materials mit leitfähigen Partikeln ist vorzugsweise so gewählt, dass die leitfähigen Partikel keine elektrischen Kontakte (d.h. Perkolationspfade) ausbilden, solange keine mechanische Einwirkung von außen erfolgt. In manchen Ausführungsformen der Erfindung kann auch ein Klebeband als anisotrop leitfähiges Material verwendet werden, das senkrecht zur Bandoberfläche leitfähige und isolierende Bereiche umfasst. Solche Klebebänder werden auch Zebragummi oder Leitgummi genannt. Im Rahmen der Erfindung bezieht sich die anisotrope Leitfähigkeit insbesondere auf die anisotrope elektrische Leitfähigkeit, wobei zusätzlich auch die thermische Leitfähigkeit umfasst sein kann.

Der Sensorchip weist einen elektrisch isolierenden Träger, mindestens zwei Kontaktpads und eine Widerstandsstruktur auf.

Der elektrisch isolierende Träger weist eine erste Seite und eine der ersten Seite gegenüberliegende zweite Seite auf. Vorzugsweise sind die erste Seite und die gegenüberliegende zweite Seite des elektrisch isolierenden Trägers gleichbedeutend mit der ersten und der zweiten Seite des Sensorchips. Vorzugsweise weist die erste Seite des elektrisch isolierenden Trägers eine Fläche auf, die höchstens 1 mm² beträgt, insbesondere weist die erste Seite des elektrisch isolierenden Trägers eine Fläche auf die höchstens 0,3 mm² und ganz besonders bevorzugt von höchstens 0,2 mm² beträgt. Damit weist üblicher Weise auch die erste Seite des Sensorchips, die durch die erste Seite des elektrisch isolierenden Trägers vorgegeben ist, die angegebenen Flächen auf. Zumindest auf einer der Seiten, insbesondere auf der ersten Seite, auf der die Kontaktpads und die Widerstandsstruktur angeordnet sind, weist der elektrisch isolierende Träger ein dielektrisches Material auf. Optional weisen beide Seiten des elektrisch isolierenden Trägers ein dielektrisches Material auf. Vorzugsweise ist das dielektrische Material als zusammenhängende Schicht ausgestaltet. Das dielektrische Material kann optional auf einem elektrisch leitfähigen Material oder auf einem dielektrischen Material angeordnet sein. Das elektrisch leitfähige Material kann zum Bespiel ein Metall oder ein dotierter Hableiter sein. Für den Fall, dass das dielektrische Material des elektrisch isolierenden Trägers auf einem elektrisch leitfähigen Material angeordnet ist, kann auch von eine Mehrschichtaufbau des elektrisch isolierenden Trägers gesprochen werden. Das elektrisch leitfähige Material des elektrisch isolierenden Trägers steht vorzugsweise nicht mit den Kontaktpads oder der Widerstandsstruktur in Kontakt. In einer möglichen Ausgestaltung besteht der elektrisch isolierende Träger aus dielektrischem Material.

In einer möglichen Ausgestaltung der Erfindung besteht der elektrisch isolierende Träger aus einem oder mehreren dielektrischen Materialien. Das dielektrische Material des gesamten elektrisch isolierende Trägers oder Teilen davon können beispielsweise ausgewählt sein aus der Gruppe enthaltend Gläser, Keramiken, Glaskeramiken und Polymere. Die Gläser können ausgewählt sein aus Silikatgläsern. Die Keramiken können zum Beispiel ausgewählt sein aus Oxidkeramiken, Nitridkeramiken oder Carbidkeramiken. Oxidkeramiken können beispielsweise Siliziumoxid, Aluminiumoxid, Titanoxid und Zirkonoxid sowie Mischungen dieser Oxide beinhalten. Die Nitridkeramik kann ein Metallnitrid umfassen und vorzugsweise ausgewählt sein aus der Gruppe enthaltend Titannitrid, Siliziumnitrid und Aluminiumnitrid. Die Polymere können beispielsweise Polyimide oder Silikone umfassen.

In einer vorteilhaften Ausgestaltung der Erfindung umfasst der elektrisch isolierende Träger ein anorganisches Material oder er besteht daraus. Das anorganische Material umfasst vorzugsweise Silizium sowie Verbindung von Silizium. In einer besonders bevorzugten Ausgestaltung der Erfindung kann der elektrisch isolierende Träger einen Siliziumwafer umfassen, der mindestens auf der ersten Seite mit einer Schicht eines dielektrischen Materials versehen ist. Der Siliziumwafer kann entweder dotiert oder undotiert sein. Vorzugsweise enthält die dielektrische Schicht auf dem Siliziumwafer ein Metalloxid, z.B. Siliziumoxid oder Aluminiumoxid, oder sie besteht daraus. Der Vorteil bei der Verwendung eines Siliziumwafers liegt darin, dass dieser eine besonders geringe Oberflächenrauigkeit aufweist, was insbesondere für sehr kleine Sensoren mit dünnen Widerstandsschichten vorteilhaft ist. Für den Fall, dass der elektrisch isolierende Träger ein leitendes Material enthält, z.B. ein Metallblech oder einen dotierten Halbleiterwafer, ist vorzugsweise darauf zu achten, dass zumindest auf der ersten Seite ein dielektrisches Material vorliegt, insbesondere in Form einer durchgängigen Schicht, sodass die auf der ersten Seite angebrachten leitfähige Strukturen, wie z.B. die Widerstandsstruktur oder Kontaktpads, nicht kurzgeschlossen werden.

Vorzugsweise ist der elektrisch isolierende Träger als dünne Platte oder Scheibe ausgestaltet, z.B. als rechteckige Platte. Optional kann der Sensorchip, und damit auch der elektrisch isolierende Träger, flexibel sein. In einer bevorzugten Ausführungsform weist der Sensorchip eine Flexibilität auf, die mit einem Biegekrümmungsradius von mindestens 5 mm, vorzugsweise mindestens 2 mm, vorzugsweise mindestens 1 mm, biegbar ist, wobei eine relative Differenz des spezifischen Widerstands (dR/R(0)), wobei d Delta oder Δ bedeutet, der Widerstandsstruktur vor und nach dem Biegen vorzugsweise 2%, insbesondere 1% und ganz besonders bevorzugt 0,5% nicht überschreiten darf.

Eine solche Flexibilität des Sensorchips kann wie folgt gemessen werden. Der Sensorchip wird auf eine Polyimidfolie (Kapton^{®}, 25 µm) geklebt, um die Flexibilität des Sensorchips zu bestimmen. Vor dem Aufkleben wird die Oberfläche der Kapton-Folie durch Behandlung mit einer Koronaentladung aktiviert. Ein Klebstoff auf Cyanobasis (MINEA, Sekundenkleber) wird auf die Rückseite des Sensorchips aufgetragen und der Sensorchip für die Reaktionszeit des Klebstoffs auf die Polyimidfolie gedrückt. Anschließend wird die Polyimidfolie um einen zylindrischen Stab gewickelt, wobei der Sensorchip nach außen gerichtet ist. Der Durchmesser des Stabes wird im Bereich von 0,25 mm bis 10 mm gewählt. Beim Umwickeln ist die Polyimidfolie in engem Kontakt mit der Oberfläche des zylindrischen Stabes. Daher beträgt der Krümmungsradius des Sensorchips ungefähr die Hälfte des Durchmessers des Stabes. Die Dauer der maximalen Biegung wird auf etwa eine Sekunde festgelegt. Das Wickeln oder Biegen besteht also vorzugsweise aus einem Biege - und einem Entbiegevorgang. Die relative Differenz des spezifischen Widerstands d R/R(0) (wobei d delta oder Δ bedeutet) der elektrischen Struktur wird vor und nach jedem Biegezyklus gemessen. Der Sensorchip kann als flexibel gelten, solange der Krümmungsradius nicht kleiner als der Mindestradius Rm ist. Rm ist definiert als der Radius, bei dem d R/R(0) einen Wert von 2%, insbesondere 1% und ganz besonders bevorzugt von 0,5 % aufweist.

Weiterhin weist der Sensorchip mindestens zwei Kontaktpads auf, die angeordnet sind auf einer ersten Seite des elektrisch isolierenden Trägers. Als Kontaktpads können lokal aufgebrachte elektrisch leitfähige Schichten verstanden werden, die sich z.B. mit elektrischen Leitungen oder Drähten elektrisch und mechanisch robust kontaktieren lassen. Die Kontaktierung kann möglicher Weise mittels Drahtschweißen oder Drahtbonden erfolgen. Jedes der mindestens zwei Kontaktpads kann vorzugsweise jeweils bis zu 25% oder besonders bevorzugt bis zu 10% der Fläche der ersten Seite des elektrisch isolierenden Trägers einnehmen. Die Kontaktpads können beispielsweise an gegenüberliegenden Enden der ersten Seite des elektrisch isolierenden Trägers angeordnet sein oder am gleichen Ende. Je weiter die Kontaktpads voneinander entfernt sind, desto geringer ist die Gefahr diese bei der Kontaktierung kurzzuschließen. Größere Kontaktpads haben den Vorteil, dass sie leichter kontaktierbar sind. Die Dicke der Kontaktpads auf dem elektrisch isolierenden Träger beträgt bevorzugt mindestens 100 nm, insbesondere mindestens 200 nm und ganz besonders bevorzugt mindestens 500 nm. Weiterhin kann die Dicke der Kontaktpads höchstens 5 µm, insbesondere höchstens 2 µm und ganz besonders bevorzugt höchstens 1 µm betragen.

Häufig können die Kontaktpads gegenüber der Leiterstruktur der Widerstandsstruktur verbreitert sein, um eine bessere Kontaktierung mit Drähten oder Kabeln zu ermöglichen. Für den Fall, dass die Kontaktpads nicht verbreitert sind gegenüber der Widerstandsstruktur, können vorzugsweise auch die Enden der Widerstandsstruktur als Kontaktpads verstanden werden.

In einer möglichen Ausgestaltung werden die Kontaktpads mit Durchführungen (engl. *vias)* kontaktiert, sodass Drähte oder Kabel auf der zweiten Seite des elektrisch isolierenden Trägers angebracht werden können.

Bevorzugt kann mindestens ein Kontaktpad mindestens ein Kontaktpatch aufweisen. Kontaktpatches stehen besonders bevorzugt im direkten elektrischen Kontakt mit dem Kontaktpad, auf dem Sie angeordnet sind. Kontaktpatches sind vorzugsweise erhabene räumlich begrenzte Metallschichten (auch Flecken oder engl. *Patches* genannt). Die Kontaktpatches können zur verbesserten elektrischen und mechanischen Kontaktierung des Kontaktpads ausgebildet sein und auf den Kontaktpads angeordnet sein. Ein Kontaktpatch nimmt bevorzugt weniger als 10% der Fläche der ersten Seite des elektrisch isolierenden Trägers ein. Ein Kontaktpatch nimmt bevorzugt weniger als 40% der Fläche der ersten Seite des Kontaktpads ein, noch mehr bevorzugt weniger als 25%. Für die Bestimmung der Fläche der Kontaktpatches ist vorzugsweise die Projektion des Kontaktpatches auf das Kontaktpad in der Draufsicht senkrecht zur ersten Seite des elektrisch isolierenden Trägers heranzuziehen.

Besonders bevorzugt können auf einem Kontaktpad zwei bis sechzehn Kontaktpatches angeordnet sein, insbesondere zwei bis acht Kontaktpatches. Kontaktpatches können unter anderem durch galvanische Verfahren wie beispielsweise elektrochemische (ECD) und stromlose (ELD) Abscheidung von Metallen auf Kontaktpads hergestellt werden. Kontaktpatches können optional auch in einem anderen Verfahren, z.B. Dickschichtverfahren umfassend Drucken, hergestellt werden. Bevorzugt weisen die Kontaktpatches ein anderes Metall oder eine andere Legierung auf als ein darunterliegendes Kontaktpad. Für den Fall, dass auf den Kontaktpads eine Schicht vorliegt, die eine Metallabscheidung behindert, insbesondere eine Isolierschicht, kann die Schicht vor der Metallabscheidung punktuell entfernt werden, etwa mit einem Laser, und an den freigelegten Stellen können dann Kontaktpatches mittels der oben genannten Verfahren, insbesondere der galvanischen Verfahren, aufgebracht werden. Die Kontaktpatches können vorzugsweise ein Metall enthalten oder daraus bestehen, das ausgewählt ist aus der Gruppe enthaltend Nickel, Gold und Silber oder ein anderes elektrisch leitfähiges Material. Auch galvanische hergestellte Schichtsysteme sind möglich. Weitere mögliche Verfahren zum Aufbringen von Kontaktpatches sind beispielsweise Siebdruck oder Tampondruck. Die Dicke eines Kontaktpatches beträgt vorzugsweise mindestens 2 µm, insbesondere mindestens 5 µm und ganz besonders bevorzugt mindestens 10 µm. Zusätzlich beträgt die Dicke eines Kontaktpatches vorzugsweise höchstens 30 µm, insbesondere 20 µm und insbesondere höchstens 15 µm. Mit Kontaktpatches mit Dicken in diesem Dickenbereich kann vorzugsweise gut Druck auf anisotrop leitfähige Materialien ausgeübt werden und sie lassen sich gut kontaktieren. Vorzugsweise ragen die Kontaktpatches 5 µm bis 20 µm, insbesondere 5 bis 10 µm, über die Widerstandsstruktur oder die optional vorliegende Isolierschicht des Sensorchips hinaus. Dadurch können die Kontaktpatches vorzugsweise während der Herstellung eines Sensormodules lokal ausreichend Druck auf das anisotrop leitfähige Material ausüben, um eine elektrische Verbindung herzustellen, ohne dass dabei außerhalb der Kontaktpatches Kurzschlüsse erzeugt werden.

Vorteilhaft weist ein Kontaktpatch eine Fläche von 0,1 mm² oder weniger, insbesondere 0,01 mm² oder weniger und besonders bevorzugt 0,005 mm² oder weniger auf. Der Querschnitt eines Kontaktpatches in einer Ebene parallel zum elektrisch isolierenden Träger kann bevorzugt im Bereich von 10 µm bis 100 µm liegen. Weiterhin kann der Abstand zweier benachbarter Patches auf einem Kontaktpad von Kante zu Kante im Bereich von 1 µm - 300 µm liegen. In einer bevorzugten Ausführungsform ist der maximale Querschnitt eines Kontaktpatches in einer Ebene parallel zum elektrisch isolierenden Träger größer als die darunterliegende kontaktierte Fläche, des Kontaktpads. Bevorzugt ragen die Kontaktpatches über die optional vorliegende Isolierschicht oder anders ausgedrückt können die Kontaktpatches somit eine Pilzform aufweisen. Alternativ können die Kontaktpatches einen konstanten Durchmesser aufweisen, beziehungsweise nicht nach oben hin breiter werden.

Erfindungsgemäß ist auf der ersten Seite des elektrisch isolierenden Trägers eine Widerstandsstruktur angeordnet, die sich von einem ersten Kontaktpad zu mindestens einem weiteren Kontaktpad erstreckt. Im Rahmen der Erfindung kann unter einer Widerstandsstruktur ein Leiter, insbesondere ein metallischer Leiter, verstanden werden, der eine charakteristische Widerstandsänderung in Abhängigkeit von der Temperatur aufweist. In einer bevorzugten Ausgestaltung weist die Widerstandsstruktur ein Metall auf oder besteht daraus. Das Metall kann vorzugsweise ausgewählt sein aus der Gruppe enthaltend Platin, Nickel, Aluminium, Palladium, Gold, Silber und Kupfer, sowie Legierungen, die mindestens eines dieser Metalle als Hauptkomponente enthalten. Unter der Hauptkomponente einer Legierung kann das Element verstanden werden, dass den höchsten Gewichtsanteil hat. Weiter bevorzugt kann die Legierung Rhodium, Kupfer, Platin, Nickel, Aluminium, Palladium, Gold, Silber und Kupfer als mindestens eines der weiteren Legierungselemente enthalten.

Die Widerstandsstruktur enthält mindestens eine Trimmstruktur. Weiterhin kann die Widerstandsstruktur strukturiert sein und z.B. eine Mäanderstruktur aufweisen. In einer bevorzugten Ausgestaltung der Erfindung sind die Widerstandsstruktur und die mindestens zwei Kontaktpads aus einem Stück gefertigt.

Die Dicke der Widerstandsstruktur auf dem elektrisch isolierenden Träger beträgt bevorzugt mindestens 100 nm, insbesondere mindestens 200 nm und ganz besonders bevorzugt mindestens 500 nm. Weiterhin kann die Dicke der Widerstandsstruktur höchstens 5 µm, insbesondere höchstens 2 µm und ganz besonders bevorzugt höchstens 1 µm betragen.

Beispielsweise können die Kontaktpads und die Widerstandsstruktur jeweils oder gemeinsam aus einer flächigen leitfähigen Schicht, insbesondere einer metallischen Schicht, mittels anschließender Strukturierung erhalten werden. Die Schicht kann mittels Dünnschicht- oder Dickschichtverfahren hergestellten werden. Optional enthalten die Widerstandsstruktur und die Kontaktpads dasselbe Material oder sie bestehen daraus.

In einer alternativen Ausführungsform können die Kontaktpads und die Widerstandsstruktur unabhängig voneinander aufgetragen werden. In diesem Fall können die Kontaktpads und die Widerstandsstruktur mit demselben oder mit verschiedenen, hierin genannten Verfahren hergestellt werden. Die Schichtdicke der Widerstandsstruktur und der Kontaktpads kann optional gleich oder verschieden sein und jeweils optional die Werte aufweisen, wie sie für die Widerstandsstruktur angegeben sind.

Die Widerstandsstruktur umfasst mindestens eine Trimmstruktur. Optional umfasst die Widerstandsstruktur zwei oder mehr Trimmstrukturen. Eine Trimmstruktur ist vorzugsweise eine leitfähige Struktur, deren Widerstand durch Materialmanipulation verändert, insbesondere erhöht, werden kann. Insbesondere kann die mindestens eine Trimmstruktur so manipuliert werden, dass der Widerstand der gesamten Widerstandsstruktur enthaltend die Trimmstruktur einem festgelegten Nennwiderstand entspricht. Insbesondere kann die Materialmanipulation ein Abtragen sein. Das Abtragen kann vorzugsweise mit einem Verfahren erfolgen, das ausgewählt ist aus Ätzen, Fräsen, Schleifen sowie Laserablation. Wenn im Rahmen der Erfindung von einem Nennwiderstand die Rede ist, ist für den Fachmann ersichtlich, dass es sich hier um einen nominalen Wert handelt und dass der tatsächliche Widerstand z.B. auf Grund von Produktionsschwankungen, in einem Toleranzbereich um den Nennwiderstand schwanken kann. Zum Beispiel für Platin-Widerstandsstrukturen können die Toleranzbereiche in einer Norm, z.B. einer DIN-Norm spezifiziert sein. Die mindestens eine Trimmstruktur bildet insbesondere eine elektrische Reihen- oder Parallelschaltung mit dem restlichen Bereich der Widerstandsstruktur.

Die mindestens eine Trimmstruktur kann so gestaltet sein, dass deren Widerstand stufenweise oder kontinuierlich verändert werden kann. Ein stufenweiser Trimm kann auch als Digitaltrimm bezeichnet werden und ein kontinuierlicher Trimm als Analogtrimm. Eine Struktur, die eine stufenweise Anpassung des Widerstands erlaubt, ist zum Beispiel eine in parallellaufende Einzelstränge aufgeteilte Leiterbahnstruktur, die so bearbeitet werden kann, dass einzelne der parallellaufenden Leiterbahnen aufgetrennt werden können, wodurch sich der Leitungsquerschnitt verringert. Eine Struktur, die einen kontinuierliche Anpassung des Widerstands erlaubt, kann beispielsweise ein Streifen sein, der so bearbeitet werden kann, dass sich die Strecke, die der elektrische Strom durchfließen muss, kontinuierlich verlängert oder dass der Leitungsquerschnitt reduziert wird, z.B. indem ein Schlitz in den Streifen hineingeschnitten wird. Vorzugsweise umfasst die Widerstandsstruktur mindestens eine Trimmstruktur für einen Analogtrimm und mindestens eine Trimmstruktur für einen Digitaltrimm, da mit dieser Anordnung der Widerstand besonders genau eingestellt werden kann. Ganz besonders bevorzugt weisen beide Trimmstrukturen Trimmstellen auf.

In einer Ausführung der Erfindung weist das Sensorelement eine Isolierschicht auf, wobei die Isolierschicht bevorzugt auf der ersten Seite des elektrisch isolierenden Trägers angeordnet ist. Die Widerstandsstruktur ist bevorzugt zumindest im Bereich außerhalb der mindestens einen Trimmstruktur mit der Isolierschicht teilweise oder vollständig bedeckt. In einer bevorzugten Ausführung ist die mindestens eine Trimmstruktur zumindest teilweise nicht von einer Isolierschicht bedeckt. Auch die Kontaktpads können optional nicht von der Isolierschicht bedeckt sein. Dadurch kann das Material der Trimmstruktur manipuliert werden, insbesondere mittels Laserablation. Zum Beispiel kann die Isolierschicht im Bereich einer Trimmstruktur eine Aussparung aufweisen. Die Aussparung, auch Öffnung oder Fenster genannt, kann direkt bei der Herstellung der Isolierschicht erzeugt werden oder die Isolierschicht wird zuerst flächig hergestellt und nachträglich wird die Aussparung in der Isolierschicht erzeugt.

Die Isolierschicht kann ein dielektrisches Material umfassen oder daraus bestehen, das ausgewählt ist aus der Gruppe bestehend aus Polymeren, Hybridpolymeren, Gläsern, Keramiken und Glaskeramiken. Die Polymere der Isolierschicht umfassen vorzugsweise mindestens ein Material, das ausgewählt ist aus Polyimiden, Parylenen und Epoxiden.

Die Isolierschicht auf der ersten Seite des elektrisch isolierenden Trägers, insbesondere enthaltend oder bestehend aus Polyimid, weist vorzugsweise eine mittlere Dicke im Bereich von 0,5 µm - 50 µm auf. Bevorzugt liegt die Dicke zwischen 2 µm und 20 µm. Ganz besonders bevorzugt liegt die Dicke der Isolierschicht im Bereich von 2,5 µm - 5 µm.

In einer möglichen Ausgestaltung der Erfindung kann die Oberfläche der Widerstandsstruktur des Sensorchips zumindest teilweise oder sogar vollständig mit einer ersten anorganischen Passivierungsschicht beschichtet sein. Die anorganische Passivierungsschicht ist vorzugsweise nicht gleichzusetzten mit der Isolierschicht. Bevorzugt dient die anorganische Passivierungsschicht dazu die Widerstandsstruktur vor Korrosion und Verunreinigung zu schützen.

Vorzugsweise ist sowohl der elektrisch isolierende Träger als auch die Widerstandsstruktur mit einer ersten anorganische Passivierungsschicht bedeckt. In einer möglichen Ausgestaltung der Erfindung weist die erste anorganische Passivierungsschicht im Bereich der mindestens einen Trimmstruktur Löcher oder Defekte auf, die vom Trimmen resultieren können, insbesondere im Bereich der Trimmstellen. Optional kann das Material der ersten anorganischen Passivierungsschicht, das im Bereich der Löcher oder Defekte entfernt wurde um diese Löcher oder Defekte herum abgelagert sein und dort als Passivierungsschicht fungieren. Dadurch können vorteilhaft Teile einer Trimmstruktur, die durch den Trimmprozess initial freigelegt wurden, im selben Prozessschritt wieder passiviert werden.

Die erste anorganische Passivierungsschicht weist vorzugsweise ein Oxid, ein Nitrid oder eine Oxid-Nitrid-Kompositmaterial auf. Das Oxid kann ein Metalloxid sein und vorzugsweise ausgewählt sein aus der Gruppe enthaltend Siliziumoxid, Aluminiumoxid und Titanoxid. Das Nitrid kann ein Metallnitrid sein und vorzugsweise ausgewählt sein aus der Gruppe enthaltend Titannitrid, Siliziumnitrid und Aluminiumnitrid.

Das Oxid-Nitrid-Kompositmaterial kann ein Mehrschichtmaterial umfassen, beispielsweise ein Mehrschichtmaterial aus mindestens einer Oxidschicht und mindestens einer Nitridschicht, die übereinandergestapelt sind. Die erste anorganische Passivierungsschicht weist vorzugsweise eine mittlere Dicke im Bereich von 0,4 µm bis 2 µm auf. Wenn die erste anorganische Passivierungsschicht ein Oxid-Nitrid-Kompositmaterial aufweist, insbesondere ein Schichtmaterial, weist vorzugsweise sowohl die Oxidschicht als auch die Nitridschicht eine mittlere Dicke von mindestens 0,4 µm auf.

Die anorganische Passivierungsschicht ist insbesondere elektrisch isolierend und/oder dient als Feuchtigkeitsbarriere, z.B. gegen Luftfeuchtigkeit.

Erfindungsgemäß kann auf der ersten Seite des elektrisch isolierenden Trägers zumindest auf der mindestens einen Trimmstruktur ein anisotrop-leitfähiges Materials indirekt oder direkt angeordnet sein. Indirekt bedeutet, dass zwischen der mindestens einen Trimmstruktur und dem anisotrop leitfähigen Material weitere Materialien, insbesondere Schichten, vorliegen. Dieses weitere Material kann insbesondere eine erste anorganische Passivierungsschicht sein. Direkt bedeutet hier, dass die mindestens eine Trimmstruktur mit dem anisotrop leitfähigen Material in Kontakt steht. Vorzugsweise ist das anisotrop leitfähige Material so auf der mindestens einen Trimmstruktur angeordnet, dass es die mindestens eine Trimmstruktur verschließt, insbesondere hermetisch verschließt. Dadurch kann eine Trimmstruktur gut vor Umwelteinflüssen geschützt werden. Weiterhin bevorzugt sind die gesamte Widerstandsstruktur sowie die Kontaktpads mit dem anisotrop leitfähigen Material bedeckt. Das anisotrop leitfähige Material kann in Form einer Schicht vorliegen. Falls auf der ersten Seite des Trägers eine Isolierschicht vorliegt ist das anisotrop leitfähige Material auf dieser Schicht angeordnet.

Die mindestens eine Trimmstruktur weist vorzugsweise mindestens einen Bereich auf, in dem ein Teil der Trimmstruktur durchtrennt ist und / oder in dem in einem kontinuierlichen Bereich der Trimmstruktur Material teilweise abgetragen ist. Ein durchtrennter oder abgetragener Bereich einer Trimmstruktur wird auch Trimmstelle genannt.

Optional ist eine vorhandene erste anorganische Passivierungsschicht in den durchtrennten bzw. abgetragenen Bereichen der mindestens einen Trimmstruktur entfernt oder modifiziert. Falls im Bereich der mindestens einen Trimmstruktur die Isolierschicht vorliegt, kann diese durch das Trimmen zumindest partiell entfernt werden. Besonders bevorzugt wird das Sensorelement durch eine optional vorliegende erste anorganische Passivierungsschicht hindurchgetrimmt.

In einer besonders bevorzugten Ausführungsform der Erfindung ist die mit dem anisotrop leitfähigen Kleber bedeckte mindestens eine Trimmstruktur an der vom elektrisch isolierenden Träger abgewandten Seite zumindest teilweise oder vollständig nicht von mindestens einer weiteren Passivierungsschicht oder einer Abdeckschicht bedeckt. Insbesondere ist zumindest auf Teilen der mindestens einen Trimmstruktur keine Glas- oder Keramikschicht oder keine Polymerschicht angeordnet. In einer weiteren bevorzugten Ausführungsform ist auf zumindest einem Teil der mindestens einen Trimmstruktur keine Polymerschicht, Glasschicht oder Keramikschicht vorhanden, während sich in einem anderen Bereich der ersten Seite, z. B auf einem anderen Teil der Widerstandsstruktur, eine Polymerschicht oder Glasschicht oder Keramikschicht als Abdeckschicht oder Passivierungsschicht befindet.

Bei bekannten, getrimmten Sensorelementen aus dem Stand er Technik, insbesondere Pt-RTDs, wird typischer Weise durch ein Fenster in einer oder mehreren Passivierungsschichten bzw. Abdeckschichten oder vor dem Anbringen einer Passivierungsschicht bzw. Abdeckschicht getrimmt. Diese Passivierungsschicht im Stand der Technik ist meistens aus Glas oder Glaskeramik.

Vorzugsweise weist die erste Seite des elektrisch isolierenden Trägers, und damit vorzugsweise auch der ersten Seite des Sensorchips, eine Fläche auf, die höchstens 1 mm² beträgt, insbesondere weist die erste Seite des Sensorchips eine Fläche auf die höchstens 0,3 mm² und ganz besonders bevorzugt von höchstens 0,2 mm² beträgt. Weiterhin kann der Sensorchip eine Dicke von höchstens 200 µm, vorzugsweise von höchstens 100 µm und ganz besonders bevorzugt von höchstens 50 µm aufweisen. Die Dicke wird insbesondere senkrecht zur Oberfläche bestimmt, auf der die Widerstandsstruktur angeordnet ist. Der Sensorchip kann zum Beispiel unter Verwendung lithographischer Verfahren hergestellt sein, wie sie in der Halbleiterfertigung eingesetzt werden. Der Vorteil einer geringen Dicke des Sensorchips liegt darin, dass besonders flache Sensormodule realisiert werden können, die wenig Platz benötigen. Außerdem weisen Sensorchips mit geringer Dicke eine geringe Masse auf, wodurch die Ansprechzeit verbessert werden kann.

Der Sensorchip weist vorzugsweise einen Nennwiderstand auf. Der Nennwiderstand bei 0°C kann beispielsweise 50 Ω, 100 Ω, 200 Ω, 250 Ω, 1000 Ω, 2500 Ω, 5000 Ω oder 10000 Ω betragen. Für den Fall, dass der Widerstand der Widerstandsstruktur nach der Erzeugung der Widerstandsstruktur kleiner als der Nennwiderstand ist, kann der Widerstand auf den Nennwiderstand eingestellt werden. Das Einstellen auf einen engen Toleranzbereich nahe um den Nennwiderstand, auch Trimmen genannt, erfolgt bevorzugt über die mindestens eine Trimmstruktur. Bevorzugt werden Sensorwiderstände innerhalb der Toleranzbereiche um den Nennwiderstand gemäß IEC 751 / EN 60751 oder die Klasse 1/10 B eingestellt. Das Trimmen der mindestens einen Trimmstruktur kann durch Ablation wie z.B. durch Laserablation erfolgen. Für den Fall, dass der Widerstand der Widerstandsstruktur aus den vorherigen Fertigungsschritten bereits dem Nennwiderstand entspricht, kann optional auf ein Trimmen verzichtet werden.

In einer möglichen Ausführung kann der Sensorchip mit einem Verfahren hergestellt werden, das die folgenden Schritte enthält:
- Bereitstellen eines elektrisch isolierenden Trägers,
- Aufbringen einer leitfähigen Schicht, insbesondere einer metallischen Schicht, mittels bekannter Dünn- oder Dickschichtverfahren,
- Strukturieren der leitfähigen Schicht unter Erhalt einer Widerstandsstruktur umfassend mindestens eine Trimmstruktur und mindestens zwei Kontaktpads, zwischen denen sich die Widerstandsstruktur erstreckt,
- optional, Passivieren der Widerstandsstruktur mit einer anorganischen Passivierungsschicht,
- optional, Bedecken der Widerstandsstruktur mit einer Isolierschicht, wobei die Isolierschicht die mindestens eine Trimmstruktur zumindest teilweise nicht bedeckt und
- Trimmen der Widerstandsstruktur über die mindestens eine Trimmstruktur auf einen Nennwiderstand.

Optional können Kontaktpatches auf die Kontaktpads aufgetragen werden, z.B. mit galvanischen Verfahren oder mittels Druckens.

Das verwendete Dünnschichtverfahren zum Aufbringen einer leitfähigen Schicht kann in einem Beispiel ausgewählt sein aus physikalischer Gasphasenabscheidung (PVD) und Sputtering. Das Dickschichtverfahren kann zum Beispiel ein Druckverfahren wie z.B. ein Siebdruckverfahren sein.

Das Strukturieren der leitfähigen Schicht kann durch lithografische Verfahren oder mittels Ablationsverfahren, wie z.B. Laserablation, erfolgen.

Ein besonders bevorzugtes Verfahren zur Herstellung eines Sensorchips kann die folgenden Schritte aufweisen. Zuerst werden auf der ersten Seite eines elektrisch isolierenden Trägers Kontaktpads angeordnet. Von einem ersten Kontaktpad erstreckt sich eine Widerstandsstruktur zu einem weiteren Kontaktpad. Die Widerstandsstruktur enthält mindestens eine Trimmstruktur. Die Widerstandsstruktur ist zumindest in einem Abschnitt vorzugsweise mäanderförmig ausgebildet. Im nächsten Schritt wird eine Isolierschicht auf der ersten Seite des elektrisch isolierenden Trägers aufgebracht, z.B. durch Spincoating mit einem Polyimid. Anschließend wird die Isolierschicht zumindest teilweise im Bereich der Kontaktpads sowie im Bereich, der mindestens einen Trimmstruktur entfernt. Danach werden auf die von der Isolierschicht befreiten Kontaktpad-Bereiche Kontaktpatches aufgebracht. Im folgenden Schritt wird die Widerstandsstruktur über die mindestens eine Trimmstruktur auf einen Nennwiderstand getrimmt. Die dabei erzeugten Trimmstellen sind beispielsweise mit einem Laser erzeugt worden und können einzelne Brücken einer Trimmstruktur durchtrennen. Optional können im Bereich der Trimmstellen zusätzlich Teile des elektrisch isolierenden Trägers entfernt sein oder aber nur Teile der Trimmstruktur. Optional können die Schritte zum Herstellen der Kontaktpatches und des Trimmens in ihrer Reihenfolge vertauscht werden. Der Sensorchip, der durch die beschriebenen Schritte erhältlich ist, kann in einem erfindungsgemäßen Sensorelement oder Sensormodul eingesetzt werden.

In einem zweiten Aspekt betrifft die Erfindung ein Sensormodul aufweisend ein erfindungsgemäßes Sensorelement und ein Substrat aufweisend eine erste Oberfläche mit darauf angeordneten Leiterstrukturen. Das Sensorelement enthält einen Sensorchip und ein anisotrop leitfähiges Material. Der Sensorchip umfasst insbesondere einen elektrisch isolierenden Träger aufweisend eine erste Seite und eine der ersten Seite gegenüberliegende zweite Seite, mindestens zwei Kontaktpads angeordnet auf einer ersten Seite des elektrisch isolierenden Trägers und eine Widerstandsstruktur auf der ersten Seite des elektrisch isolierenden Trägers, die sich von einem ersten Kontaktpad zu mindestens einem weiteren Kontaktpad erstreckt, wobei die Widerstandsstruktur mindestens eine Trimmstruktur enthält. Auf der ersten Seite des elektrisch isolierenden Trägers ist zumindest auf der Trimmstruktur ein anisotrop leitfähiges Material indirekt oder direkt angeordnet.

Das Sensorelement auf dem Substrat, ist mit dem anisotrop leitfähigen Material hin zur ersten Oberfläche des Substrats angeordnet. Anders ausgedrückt ist das Sensorelement mit der ersten Seite des elektrisch isolierenden Trägers hin zur ersten Oberfläche des Substrats ausgerichtet. Zwischen den Kontaktpads des Sensorchips und den Leiterstrukturen des Substrats sind elektrisch leitfähige Kontakte durch das anisotrop leitfähige Material ausgebildet. Dabei sind die elektrischen Kontakte insbesondere nur lokal zwischen den Kontaktpads des Sensorchips und den Leiterstrukturen des Substrats ausgebildet. Das anisotrop-leitfähige Material befestigt optional zusätzlich den Sensorchip mechanisch auf dem Substrat. Weiterhin gewährt das anisotrop leitfähige Material vorzugsweise eine thermische Leitfähigkeit, die höher ist als Luft. Gleichzeitig werden durch das anisotrop leitfähige Material bevorzugt die Leiterstrukturen auf der ersten Oberfläche des Substrats gegen die Widerstandsstruktur des Sensorchips außerhalb der Kontaktpads gegeneinander elektrisch isoliert. Ebenso kann das anisotrop leitfähige Material je nach Ausführung bewirken, dass weitere Komponenten wie Kontaktpatches oder die Leiterstrukturen auf dem Substrat elektrisch gegeneinander isoliert werden, sodass sie nicht direkt miteinander elektrisch im Kontakt stehen.

Bevorzugt werden die elektrischen Kontakte zwischen dem erfindungsgemäßen Sensorelement und den Leiterstrukturen annähernd senkrecht zur Substratebene ausgebildet. Besonders bevorzugt beträgt der Winkel des Strompfades zur Trägeroberfläche zwischen 75 und 105 °, ganz besonders bevorzugt zwischen 85° und 95°. Parallel zum Träger wirkt das anisotrop leitfähige Material vorzugsweise elektrisch isolierend.

Das Substrat aufweisend eine erste Oberfläche mit mindestens zwei darauf angeordneten Leiterstrukturen ist vorzugsweise ein elektrisch isolierendes Substrat. Die Leiterstrukturen können beispielsweise ein Metall aufweisen oder daraus bestehen. Das Metall kann beispielsweise ausgewählt sein aus der Gruppe enthaltend Gold, Silber und Kupfer. Alternative können auch andere elektrisch leitfähige Materialien für die Leiterstrukturen verwendet werden. Das Substrat aufweisend eine erste Oberfläche mit mindestens zwei darauf angeordneten Leiterstrukturen kann beispielsweise eine Leiterplatte, insbesondere eine gedruckte Leiterplatte (PCB) sein. Die Leiterstrukturen dienen beispielsweise dazu den Sensorchip mit der Peripherie zu verbinden. Dies können weitere elektrische oder elektronische Komponenten oder einer Auswertungselektronik sein.

Vorzugsweise bedeckt das anisotrop leitfähige Material die mindestens eine Trimmstruktur zumindest teilweise oder vollständig. Besonders vorteilhaft kann das anisotrop leitfähige Material die mindestens eine Trimmstruktur verschließen oder sogar hermetisch verschließen. Insbesondere verschließt das anisotrop leitfähige Material Trimmstellen der mindestens einen Trimmstruktur. Dadurch kann die mindestens eine Trimmstruktur vor Umwelteinflüssen wie Sauerstoff oder Feuchtigkeit geschützt werden. Vorzugsweise füllt das anisotrop leitfähige Material in dem Sensormodul den Zwischenraum zwischen Sensorchip und Substrat teilweise oder vollständig aus.

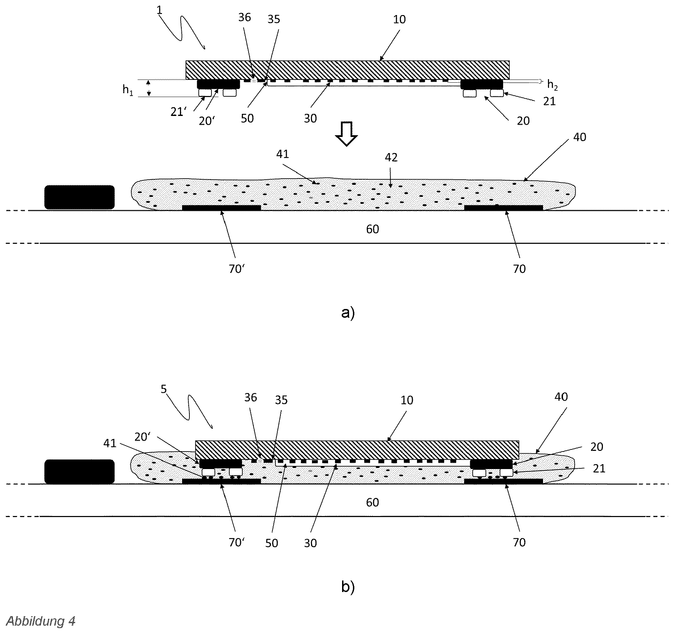

Besonders vorteilhaft ist die Höhe h₁ der Kontaktpads, beziehungsweise der Kontaktpads in Kombination mit den optionalen Kontaktpatches, auf der ersten Oberfläche des Sensorchips höher als die Höhe h₂ der Widerstandsstruktur. Zur Veranschaulichung der Höhen h₁ und h₂ wird auf Abbildung 4a) verwiesen. Alternativ bevorzugt sind die Leiterstrukturen auf dem Substrat, die vom Sensorchip kontaktiert werden, höher als der umliegende Bereich um die zu kontaktierende Leiterstrukturen herum. Auf diese Weise kann erreicht werden, dass das anisotrop leitfähige Material in den Bereichen zwischen den Kontaktpads und den Leiterstrukturen zusammengedrückt wird und lokal für einen elektrischen Kontakt sorgen kann. In diesem Zusammenhang wird auf die Abbildungen 4a) und 4b) verwiesen, die diesen Sachverhalt beispielhaft darstellen. Die Bereiche des anisotrop leifähigen Materials, auf die bei der Montage kein erhöhter Druck zwischen den Kontaktpads und den Leiterstrukturen ausgeübt wird, tragen im fertigen Sensormodul nicht zur elektrischen Kontaktierung des Sensorchips mit dem Substrat bei. Dadurch, dass das anisotrop leitfähige Material die mindestens eine Trimmstruktur bedeckt und schützt, kann auf ein zusätzliches Auftragen einer Isolierschicht oder Abdeckschicht, so wie es im Stand der Technik üblich ist, im Bereich der mindestens einen Trimmstruktur verzichtet werden.

Die elektrisch isolierende Matrix des anisotrop leitfähigen Materials im Sensormodul verfügt vorzugsweise über eine höhere thermische Leitfähigkeit als Luft. Besonders bevorzugt ist eine thermische Leitfähigkeit in Richtung senkrecht zum Substrat auch außerhalb des vermittelten elektrischen Kontakts größer als 0,1 W/m·K. Bevorzugt werden die Materialkombinationen und Fügeprozesse so ausgewählt, dass der Zwischenraum zwischen Sensorchip und Substrat vollständig mit anisotrop leitfähigem Material ausgefüllt ist. Insbesondere tritt keine Spaltbildung an den Grenzflächen zwischen anisotrop leitfähigem Material und dem Substrat beziehungsweise dem Sensorchip auf. So kann unter anderem das Eindringen von Wasser, Sauerstoff oder anderen Kontaminationen verhindert werden.

In einer bevorzugten Ausführung weist das Sensorelement des Sensormoduls ein aushärtendes anisotrop leitfähiges Material und einen flexiblen Sensorchip auf. Das Aushärten eines anisotrop leitfähigen Materials kann zu Schrumpfung führen. Die durch Schrumpfung induzierten Montagespannungen können unter anderem reduziert werden, indem sich der flexible Sensorchip verformt. Insbesondere weist das Sensormodul einen flexiblen Sensorchip auf, der mit einem starren Substrat über ein anisotrop leitfähiges Material verbunden ist. Starre Substrate können z.B. Metallkörper, Keramik- oder Glasbauteile sein.

In einer weiteren Ausführung kann ein Sensorchip auf einem flexiblen Substrat angeordnet sein. In diesem Fall kann das flexible Substrat durch Verformung mechanische Spannungen ausgleichen, die durch Schrumpfung eines aushärtenden anisotrop leitfähigen Materials entstehen. Dadurch kann die Wahrscheinlichkeit eines mechanischen Abrisses reduziert werden.

In einer anderen möglichen Ausführung des Sensormoduls kann ein starrer Sensorchip mit einem starren Substrat über ein anisotrop leitfähiges Material verbunden sein.

Bevorzugt ist die mittlere Schichtdicke des anisotrop leitfähigen Materials kleiner als 20 µm, besonders bevorzugt kleiner als 10 µm. Für die Bestimmung der mittleren Schichtdicke werden insbesondere nur die Bereiche des anisotrop leitfähigen Materials herangezogen, die nicht für die elektrische Kontaktierung sorgen.

Optional ist auf jedem Kontaktpad jeweils mindestens ein Kontaktpatch angeordnet, wie es hierin beschrieben ist. Weiterhin können bevorzugt auf einem Kontaktpad mindestens zwei räumlich getrennte Kontaktpatches angeordnet sein. In einer Ausführung entspricht die Anzahl der Kontaktpatches auf den Kontaktpads mindestens der Zahl der zu kontaktierenden Leiterstrukturen auf dem Substrat. Die Kontaktierung der Leiterstrukturen erfolgt bevorzugt über das anisotrop leitfähige Material.

In einer besonders bevorzugten Ausführungsform der Erfindung sind auf jedem Kontaktpad mindestens zwei Kontaktpatches angeordnet, wobei mindestens zwei Kontaktpatches auf demselben Kontaktpad von unterschiedlichen Leiterstrukturen kontaktiert werden. Im einfachsten Fall sind auf jedem Kontaktpad zwei Kontaktpatches angeordnet und jedes Kontaktpatch kontaktiert jeweils eine Leiterstruktur auf dem Substrat. Optional können auf einem Kontaktpad auch mehr als zwei Kontaktpatches angeordnet sein, wobei ein erster Teil der Kontaktpatches gemeinsam eine erste Leiterstruktur kontaktieren und ein weiterer Teil der Kontaktpatches gemeinsam eine zweite Leiterstruktur kontaktieren. In einer weiteren Alternative sind zwei oder mehr Kontaktpatches auf einem Kontaktpad angeordnet und jedes Kontaktpatch kontaktiert jeweils eine separate Leiterstruktur.

In Ausführungsformen, bei denen mindestens zwei Kontaktpatches auf einem Kontaktpad angeordnet sind und jedes Kontaktpatch eine separate Leiterstruktur kontaktiert, kann vorzugsweise eine Vierleiter-Messkonfiguration verwirklicht werden, wie sie dem Fachmann für Sensorik bekannt ist. Eine Vierleiter-Messkonfiguration hat den Vorteil, dass die Leitungs- und Anschlusswiderstände die Messung des Widerstands nicht verfälschen können.

In einer anderen Ausführung des Sensormoduls können alle Kontaktpatches auf einem Kontaktpad dieselbe Leiterstruktur kontaktieren. Alternativ können mindestens zwei Kontaktpatches auf einem Kontaktpad unterschiedliche Leiterstrukturen auf dem Substrat kontaktieren.

Weiterhin optional können auf einem Kontaktpad mindestens zwei Kontaktpatches angeordnet sein, wobei mindestens eines der Kontaktpatches keinen elektrischen Kontakt zu einer Leiterstruktur auf dem Substrat aufweist.

Für den Fall, dass auf einem Kontaktpad mehrere Kontaktpatches vorliegen, sind die Kontaktpatches vorzugsweise nur über das Kontaktpad elektrisch miteinander verbunden, wobei keine direkte elektrische Leitung von einem Kontaktpatch zu einem benachbarten Kontaktpatch vorliegt.

In einer weiteren möglichen Ausführung zur Befestigung eines flexiblen Sensorchips auf einer nicht ebenen Leiterstruktur sind die ebenen Oberflächen der Kontaktpatches zumindest nach der Montage auf der Leiterstruktur nicht mehr planparallel angeordnet.

Erfindungsgemäß betrifft die Erfindung ein Verfahren zur Herstellung eines Sensormoduls, insbesondere gemäß der vorliegenden Erfindung, aufweisend mindestens die folgenden Schritte:
a) Bereitstellen eines Substrats aufweisend eine erste Oberfläche, wobei auf dieser ersten Oberfläche eine Leiterstruktur angeordnet ist,
b) Bereitstellen eines Sensorchips gemäß einem der Ansprüche 1-11,
c) Aufbringen eines anisotrop leitfähigen Materials auf die erste Seite des elektrisch isolierenden Trägers des Sensorchips oder auf die erste Oberfläche des Substrats,
d) Positionieren des Sensorchips auf dem Substrat, sodass die Widerstandsstruktur zum Substrat hin orientiert ist und das anisotrop leitfähige Material zwischen dem Sensorchip und dem Substrat vorliegt, und
e) Herstellen elektrisch leitfähiger Verbindungen zwischen den Kontaktpads des Sensorchips und den Leiterstrukturen des Substrats durch das anisotrop leitfähige Material.

Vor, zwischen und/oder nach den genannten Schritten können weitere Schritte durchgeführt werden. Bevorzugt wird die Reihenfolge der Schritte a) bis e) eingehalten.

Insbesondere wird während Schritt e) zusätzlich der Sensorchip auf dem Substrat durch das anisotrop leitfähige Material mechanisch befestigt.

Das Substrat aufweisend eine erste Oberfläche mit darauf angeordnete Leiterstrukturen kann beispielsweise eine Leiterplatte, insbesondere eine gedruckte Leiterplatte (*printed circuit board,* PCB) sein. Das Substrat ist vorzugsweise ein elektrisch isolierendes Substrat. In Schritt b) wird ein Sensorchip bereitgestellt, insbesondere wie er hierin beschrieben ist. Der bereitgestellte Sensorchip umfasst insbesondere einen elektrisch isolierenden Träger, mindestens zwei Kontaktpads angeordnet auf einer ersten Seite des elektrisch isolierenden Trägers, und eine Widerstandsstruktur auf der ersten Seite des elektrisch isolierenden Trägers, die sich von einem ersten Kontaktpad zu mindestens einem weiteren Kontaktpad erstreckt, wobei die Widerstandsstruktur mindestens eine Trimmstruktur enthält.

Die Merkmale für die Bestandteile des Sensorchips wie sie hierin beschrieben sind, gelten insbesondere und wo anwendbar auch für den Sensorchip des erfindungsgemäßen Verfahrens. Dies gilt vorzugsweise auch umgekehrt für Merkmale des Sensorchips die im Kontext des erfindungsgemäßen Verfahrens beschrieben werden.

Der Sensorchip in Schritt b) weist vorzugsweise einen Nennwiderstand auf. Der Nennwiderstand bei 0°C kann beispielsweise 50 Ω, 100 Ω, 200 Ω, 250 Ω, 1000 Ω, 2500 Ω, 5000 Ω oder 10000 Ω betragen. Für den Fall, dass der Widerstand der Widerstandsstruktur nach der Erzeugung der Widerstandsstruktur kleiner als der Nennwiderstand ist, kann der Widerstand auf den Nennwiderstand eingestellt werden. Das Einstellen auf einen engen Toleranzbereich nahe um den Nennwiderstand, auch Trimmen genannt, erfolgt bevorzugt über die mindestens eine Trimmstruktur. Bevorzugt werden Widerstände von Widerstandsstrukturen, insbesondere aus Platin, innerhalb der Toleranzbereiche um den Nennwiderstand gemäß IEC 751 / EN 60751 oder die Klasse 1/10 B eingestellt. Das Trimmen der mindestens einen Trimmstruktur kann durch Ablation wie z.B. durch Laserablation erfolgen. Für den Fall, dass der Widerstand der Widerstandsstruktur aus den vorherigen Fertigungsschritten bereits dem Nennwiderstand entspricht, kann optional auf ein Trimmen verzichtet werden.

Vorzugsweise weist der Sensorchip mit der darauf angeordneten Widerstandsstruktur einen positiven Widerstands-Temperaturkoeffizienten auf. Besonders bevorzugt beträgt der Widerstands-Temperaturkoeffizient mindestens 0,003 K⁻¹ im Bereich von -50°C - 200°C und ganz besonders bevorzugt im Bereich von 0°C bis 100°C. Vorzugsweise besteht ein linearer Zusammenhang zwischen Temperaturänderung und Widerstandsänderung.

In Schritt c) wird ein anisotrop leitfähiges Material auf die erste Seite des elektrisch isolierenden Trägers oder auf die erste Oberfläche des Substrats aufgebracht. Vorzugsweise wird das anisotrop leitfähige Material als zusammenhängende Schicht oder als Tropfen aufgebracht. Wenn das anisotrop leitfähige Material auf die erste Seite des elektrisch isolierenden Trägers aufgebracht wird, wird es vorzugsweise so aufgebracht, dass die Kontaktpads, mit optional darauf angeordneten Kontaktpatches, bedeckt sind. Zusätzlich ist vorzugsweise wird auch die mindestens eine Trimmstruktur, insbesondere vorhandene Trimmstellen, in diesem Schritt bedeckt. In einer anderen bevorzugten Ausführung wird das anisotrop leitfähige Material auf die erste Oberfläche des Substrats aufgebracht, auf der sich Leiterstrukturen, insbesondere mindestens zwei Leiterstrukturen, befinden. Das Aufbringen des anisotrop leitfähigen Materials kann vorzugsweise mittels *Dispensens* oder Druckens erfolgen. Besonders bevorzugt wird das anisotrop leitfähige Material auf mindestens zwei Leiterstrukturen auf dem Substrat aufgebracht, die von den Kontaktpads, beziehungsweise von den darauf angeordneten Kontaktpatches kontaktiert werden sollen. Möglicher Weise ist auch der Bereich zwischen zwei Leiterstrukturen mit anisotrop leitfähigem Material bedeckt. Die Menge an anisotrop leitfähigem Material ist vorzugsweise so gewählt, dass die erste Seite des elektrisch isolierenden Trägers mit einer mittleren Schichtdicke im Bereich von 1 µm - 20 µm bedeckt ist.

In Schritt d) erfolgt ein Positionieren des Sensorchips auf dem Substrat, sodass die Widerstandsstruktur zum Substrat hin orientiert ist und das anisotrop leitfähige Material zwischen dem Sensorchip und dem Substrat vorliegt. Das Positionieren kann beispielsweise mit einem *Pick-and-Place* Verfahren erfolgen. Bei dem *Pick-and-Place* Verfahren können Sensorchips beispielsweise von einem Band, z.B. einem Heat-release tape, einem Waffle-Pack oder einem Gel-Pack bereitgestellt werden. Optional kann für das Positionieren ein Roboter verwendet werden. Das Positionieren kann manuell, semi-automatisch oder automatisch erfolgen. In einer Ausführung kann die Positionierung durch Mikroskopie unterstützt werden.

Das anisotrop leitfähige Material kann in einer Ausführung die mindestens eine Trimmstruktur zumindest teilweise bedecken und insbesondere komplett hermetisch verschließen. Beispielsweise kann der Sensorchip in ein verformbares anisotrop leitfähiges Material hineingesetzt werden. Dieses verformbare anisotrop leitfähige Material kann eine Klebmasse sein. Die Klebmasse kann optional noch nicht ausgehärtet sein. In dem verformbaren anisotrop leitfähigen Material kann der Sensorchip vorläufig fixiert sein.

In Schritt e) erfolgt ein Herstellen von elektrisch leitfähigen Verbindungen zwischen den Kontaktpads des Sensorchips und den Leiterstrukturen des Substrats durch das anisotrop leitfähige Material. Dabei wird der Sensorchip vorzugsweise so in das anisotrop leitfähige Material gepresst, dass einige leitfähigen Partikel des anisotrop leitfähigen Materials jeweils einen lokal begrenzten, elektrischen Kontakt zwischen den Kontaktpads und den Leiterstrukturen herstellen. Zusätzlich kann das anisotrop leitfähige Material optional ausgehärtet werden. Das Aushärten kann insbesondere dann erfolgen, wenn ein reaktiver Polymervorläufer (z.B. eines Polymerharzes) als Matrix für das anisotrop leitfähige Material verwendet wird. Das Aushärten kann, je nach verwendetem Polymervorläufers zum Beispiel durch Sauerstoff, Feuchtigkeit, Erhitzen oder Lichteinwirkung, wie z.B. UV-Licht, induziert werden. Durch das Aushärten kann die Festigkeit der mechanischen Anbindung verbessert werden.

Optional können die Schritte d) und e) zusammen durchgeführt werden. Das heißt, während der Sensorchip auf das anisotrop leitfähige Material positioniert wird, wird gleichzeitig der elektrische und mechanische Kontakt hergestellt. Der mechanische Kontakt kann vorzugsweise vollflächige sein, was bedeutet, dass die erste Seite des Sensorchips vollständig mit anisotrop leitfähigem Material bedeckt ist.

Das anisotrop leitfähige Material befestigt den Sensorchip mechanisch auf dem Substrat und verschließt gleichzeitig die mindestens eine Trimmstruktur auf dem Sensorchip so, dass diese vor Umwelteinflüssen geschützt ist. Außerhalb der Bereiche, in denen das anisotrop leitfähige Material zwischen den Kontaktpads und den Leiterstrukturen zusammengepresst ist, wirkt das anisotrop leitfähige Material vorzugsweise elektrisch isolierend. Nach Schritt e) ist vorzugsweise der gesamte Zwischenraum zwischen Sensorchip und Substrat mit anisotrop leitfähigem Material gefüllt.

### Kurzbeschreibung der Figuren

Im Folgenden soll die Erfindung anhand von konkreten Ausführungsbeispielen mit Hilfe von Zeichnungen veranschaulicht werden.

Abbildung 1 zeigt ein Sensorelement gemäß dem Stand der Technik.

Abbildung 2 zeigt ein mögliches Herstellungsverfahren für einen erfindungsgemäßen Sensorchip.

Abbildung 3 zeigt schematisch ein erfindungsgemäßes Sensorelement sowie die Anordnung auf einem Substrat.

Abbildung 4 zeigt eine mögliche Ausführung des erfindungsgemäßen Verfahrens zur Herstellung eines Sensormoduls.

Abbildung 5 zeigt eine mögliche Ausführung des erfindungsgemäßen Sensormoduls, wobei auf der Widerstandsstruktur keine Isolierschicht angeordnet ist.

### Bezugszeichenliste

1 Sensorchip
2 Sensorelement
5 Sensormodul
10 elektrisch isolierender Träger
11 dielektrische Schicht
12 leitfähige Schicht
20, 20' Kontaktpads
21, 21' Kontaktpatches
30 Widerstandsstruktur
35 Trimmstruktur
36 Trimmstelle
40 anisotrop leitfähiges Material
41 leitfähige Partikel
42 isolierende Matrix
45 Lötverbindung
50 Isolierschicht
51 Abdeckschicht
60 Substrat
70, 70' Leiterstrukturen

Ein zusätzliches (x) kennzeichnet durchgängig Ausführungsformen des Stands der Technik.

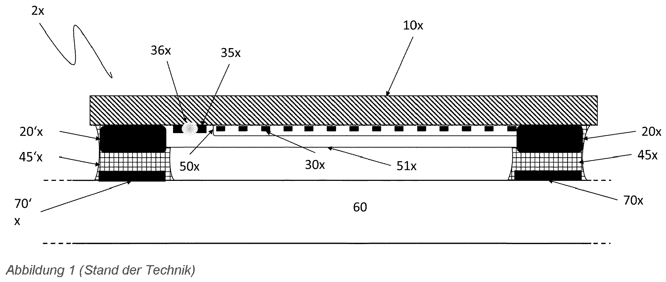

In Abbildung 1 ist ein Sensorelement (2x) aus dem Stand der Technik dargestellt. Auf einem elektrisch isolierenden Träger (10x) sind zwei Kontaktpads (20x, 20'x) angeordnet. Von dem ersten Kontaktpad (20x) erstreckt sich eine Widerstandsstruktur (30x) zum weiteren Kontaktpad (20'x). Die Widerstandsstruktur (30x) enthält eine Trimmstruktur (35x). Die Trimmstruktur (35x) wurde an einer Trimmstelle (36x) manipuliert, z.B. mittels Laserablation. Die Widerstandsstruktur ist mit einer Isolierschicht (50x), beispielsweise einer Glasschicht, versehen, wobei die Trimmstruktur (35x) nicht von der Isolierschicht bedeckt ist. Die gesamte Widerstandsstruktur 30x enthaltend die Trimmstruktur 35x ist mit einer Abdeckschicht (51x) bedeckt. Die Abdeckschicht (51x) kann beispielsweise eine weitere Glasschicht sein.

Das derart gestaltete Sensorelement (2x) des Stands der Technik kann z.B. mittels Lötstellen (45x, 45`x) über die Kontaktpads (20x, 20'x) auf einem Substrat fixiert werden. Nachteilig am Stand der Technik ist, dass die Trimmstruktur nach dem Trimmen und vor dem Einbau in ein Sensormodul mit einer weiteren Abdeckschicht (51x), insbesondere einer Glasschicht bedeckt werden muss. Dies erfordert einen zusätzlichen Prozessschritt und im Falle einer Glasschicht auch einen erhöhten Energiebedarf, da das Glas eingebrannt werden muss. Wünschenswert wäre es, wenn auf diesen Einbrennschritt verzichtet werden könnte, da auch der bereits eingestellte Widerstand der Widerstandsstruktur dadurch beeinflusst werden kann.

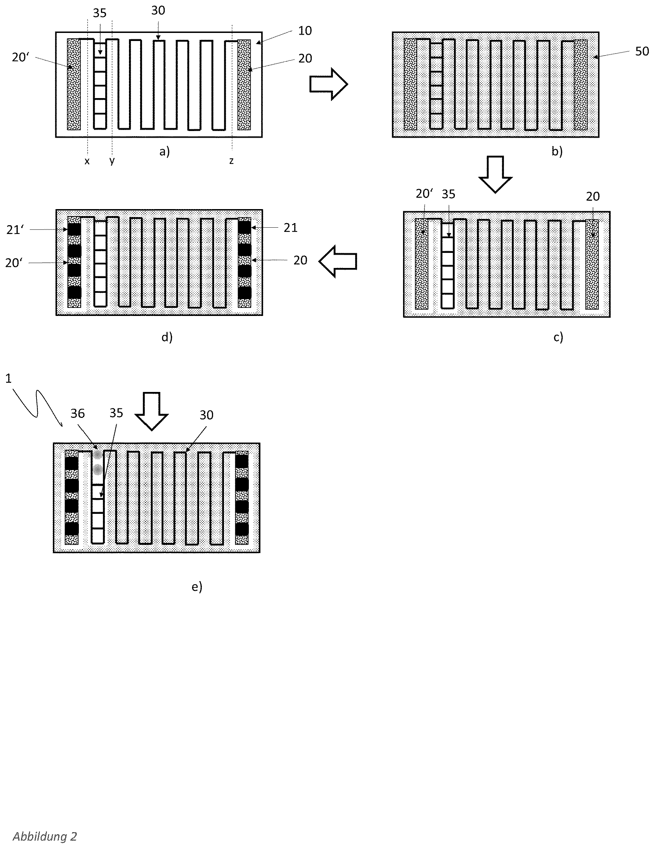

In Abbildung 2 ist ein Verfahren zur Herstellung eines Sensorchips (1) beschrieben, wie er in der Erfindung genutzt werden kann. In Schritt 2a) werden auf der ersten Seite eines elektrisch isolierenden Trägers (10) Kontaktpads (20, 20`) angeordnet. Von einem ersten Kontaktpad (20) erstreckt sich eine Widerstandsstruktur (30) zu einem weiteren Kontaktpad (20`). Die Widerstandsstruktur (30) enthält eine Trimmstruktur (35). Bevorzugt sind in diesem Fall die oben genannten elektrisch leitfähigen Elemente (20, 20', 30, 35) Dünnschichtelemente. Der Bereich der Widerstandsstruktur, der sich zwischen den gestrichelten Linien y und z befindet, ist vorzugsweise mäanderförmig ausgebildet und ist hauptsächlich für die Temperaturmessung zuständig. Im Schritt b) wird eine Isolierschicht (50) auf der ersten Seite des elektrisch isolierenden Trägers (10) aufgebracht, z.B. durch Spincoating mit einem Polyimid. In Schritt c) wird die Isolierschicht zumindest teilweise im Bereich der Kontaktpads (20, 20') sowie im Bereich der Trimmstruktur (35) entfernt. In Schritt d) werden auf die von Isolierschicht befreiten Kontaktpad-Bereiche Kontaktpatches (21, 21`) aufgebracht. In Schritt e) wird die Widerstandsstruktur (30) über die Trimmstruktur (35) auf einen Nennwiderstand getrimmt. Die Trimmstellen (36) sind in der Abbildung kreisförmige dargestellt, die beispielsweise mit einem Laser erzeugt worden sein können und die Brücken der Trimmstruktur durchtrennen. Optional können im Bereich der Trimmstellen zusätzlich Teile des elektrisch isolierenden Trägers entfernt sein oder aber nur Teile der Trimmstruktur. Optional können die Schritte d) und e) auch in ihrer Reihenfolge vertauscht werden. Der Sensorchip (1), der durch die dargestellten Schritte a) bis e) erhältlich ist, kann in einem erfindungsgemäßen Sensorelement oder Sensormodul eingesetzt werden.

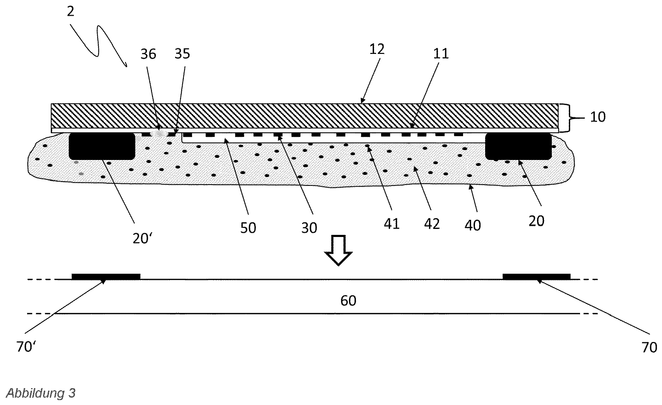

In Abbildung 3 ist eine Ausführungsform eines erfindungsgemäßen Sensorelements (2) schematisch dargestellt. Auf dem elektrisch isolierenden Träger (10) sind Kontaktpads (20, 20`) angeordnet, zwischen denen sich eine Widerstandsstruktur (30) enthaltend eine Trimmstruktur (35) erstreckt. In einer möglichen Ausführung, wie hier dargestellt, umfasst der elektrisch isolierende Träger (10) eine dielektrische Schicht (11), die auf einer leitfähigen Schicht (12) angeordnet ist. Optional kann die Trimmstruktur (35) eine Trimmstelle (36) aufweisen. Die Widerstandsstruktur (30) ist zumindest im Bereich außerhalb der Trimmstruktur (35) mit einer Isolierschicht (50) versehen. Die Kombination der Komponenten (10, 20, 30, 35 und 50) ohne das anisotrop leitfähige Material (40) kann auch als Sensorchip (1) bezeichnet werden. Auf dem Sensorchip (1) ist ein anisotrop leitfähiges Material (40) angeordnet. Das anisotrop leitfähige Material (40) enthält leitfähige Partikel 42), die in eine isolierende Matrix (41) eingebettet sind. Das anisotrop leitfähige Material (40) bedeckt die Widerstandsstruktur (30) inklusive der Trimmstruktur (35). Die Trimmstruktur (35) kann eine Trimmstelle (36) aufweisen, mit der die Widerstandsstruktur (30) auf den Nennwiderstand eingestellt wurde. Insbesondere die Trimmstruktur (35) auf der keine Isolierschicht (50) angeordnet ist, ist durch das anisotrop leitfähige Material (40) verschlossen und somit vor Umwelteinflüssen geschützt. Das erfindungsgemäße Sensorelement (2) kann beispielsweise auf der ersten Oberfläche eines Substrats (60) angeordnet werden. Auf der ersten Oberfläche des Substrats können Leiterstrukturen (70) angeordnet sein.

Abbildung 4 zeigt ein mögliches Verfahren zur Herstellung eines erfindungsgemäßen Sensormoduls (2). Zuerst wird ein Sensorchip (1) bereitgestellt. Der Sensorchip umfasst einen elektrisch isolierenden Träger (10), auf dem Kontaktpads (20, 20') auf einer ersten Seite angeordnet sind. Eine Widerstandsstruktur (30) erstreckt sich von einem ersten Kontaktpad zu einem weiteren Kontaktpad. Die Widerstandsstruktur (30) umfasst eine Trimmstruktur (35). Die Widerstandsstruktur (30) ist zumindest außerhalb der Trimmstruktur (35) mit einer Isolierschicht (50) bedeckt. Auf einem Substrat (60) sind auf einer ersten Oberfläche mindestens zwei Leiterstrukturen (70, 70`) angeordnet. Auf dem Substrat (60) ist im Bereich von zwei zu kontaktierenden, benachbarten Leiterstrukturen ein anisotrop leitfähiges Material (40) angeordnet, z.B. in Form einer Schicht, insbesondere einer Schicht eines anisotrop leitfähigen Klebers wie er im Stand der Technik bekannt ist.

Der Sensorchip (1) wird über dem Substrat (60) positioniert, so dass die erste Seite des elektrisch isolierenden Trägers mit den darauf angeordneten Kontaktpads (20, 20') zum Substrat (60) hin ausgerichtet ist. Anschließend wird der Sensorchip (1) auf dem anisotrop leitfähigen Material (40) angeordnet. Dabei wird die Trimmstruktur (35) durch das anisotrop leitfähige Material (40) verschlossen. Gleichzeitig oder anschließend wird das anisotrop leitfähige Material (40) zwischen den Kontaktpads (20, 20`) und den Leiterstrukturen (70, 70') zusammengedrückt, z.B. mit einem beheizten Stempel. Die leitfähigen Partikel (41) im anisotrop leitfähigen Material (40) stellen im Spalt zwischen den Leiterstrukturen (70, 70') und den Kontaktpads (20, 20') lokal den elektrischen Kontakt her. Für den Fall, dass das anisotrop leitfähige Material (40) einen Polymervorläufer enthält, kann das anisotrop leifähige Material aushärten. Die Höhe h₁ kennzeichnet die gesamte Höhe der Kontaktpads, auf denen optional Kontaktpatches (21, 21`) angeordnet sind. Die Höhe h₂ kennzeichnet die Höhe der Widerstandsstruktur. Es ist ersichtlich, dass die h₁ größer ist als h₂. So kann lokal im Bereich der Kontaktpads Druck auf das anisotrop leitfähige Material ausgeübt werden.

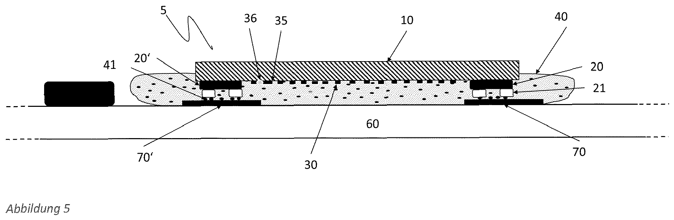

Abbildung 5 zeigt ein Sensorelement analog zu Abbildung 4b) mit dem Unterschied, dass das Sensormodul in Abbildung 5 keine Isolierschicht (50) aufweist. In dieser Ausgestaltung bedeckt das anisotrop leitfähige Material (40) sowohl die Widerstandsstruktur (30) als auch die Trimmstruktur (35) mit der Trimmstelle (36) direkt.

## Patentansprüche

1. Sensorelement (2) aufweisend einen Sensorchip (1) und ein anisotrop leitfähiges Material (40), wobei der Sensorchip (1) aufweist,
a. einen elektrisch isolierenden Träger (10) aufweisend eine erste Seite und eine der ersten Seite gegenüberliegende zweite Seite,
b. mindestens zwei Kontaktpads (20, 20`) angeordnet auf der ersten Seite des elektrisch isolierenden Trägers (10) und
c. eine Widerstandsstruktur (30) auf der ersten Seite des elektrisch isolierenden Trägers (10), die sich von einem ersten Kontaktpad (20) zu mindestens einem weiteren Kontaktpad (20') erstreckt, wobei die Widerstandsstruktur mindestens eine Trimmstruktur (35) enthält,
**dadurch gekennzeichnet, dass** auf der ersten Seite des elektrisch isolierenden Trägers (10) zumindest auf der mindestens einen Trimmstruktur (35) ein anisotrop leitfähiges Material (40) angeordnet ist.

2. Sensorelement gemäß Anspruch 1, wobei die Widerstandsstruktur (30) zumindest im Bereich außerhalb der mindestens einen Trimmstruktur (35) mindestens teilweise oder vollständig mit einer Isolierschicht (50) bedeckt ist.

3. Sensorelement gemäß einem der Ansprüche 1 oder 2, wobei die Isolierschicht (50) die mindestens einen Trimmstruktur (35) zumindest teilweise nicht bedeckt.

4. Sensorelement gemäß einem der Ansprüche 1 - 3, wobei die Isolierschicht (50) ein dielektrisches Material enthält, das ausgewählt ist aus der Gruppe bestehend aus Polymeren, Gläsern, Keramiken und Glaskeramiken.

5. Sensorelement gemäß einem der Ansprüche 1 - 4, wobei die Oberfläche der Widerstandsstruktur (30) des Sensorchips (1) zumindest teilweise mit einer ersten anorganischen Passivierungsschicht beschichtet ist, wobei die erste anorganische Passivierungsschicht vorzugsweise ein Oxid, ein Nitrid oder ein Oxid-Nitrid-Kompositmaterial aufweist.

6. Sensorelement gemäß einem der Ansprüche 1 - 5, wobei das anisotrop leitfähige Material (40) ausgewählt ist aus der Gruppe enthaltend anisotrop leitfähige Zwei-Komponenten-Kleber, anisotrop leitfähige, Ein-Komponenten-Kleber, anisotrop leitfähige Schmelzkleber und anisotrop leitfähige Filme und wobei das anisotrop leitfähige Material verformbare oder nicht-verformbare elektrisch leitfähige Partikel enthält.

7. Sensorelement gemäß einem der Ansprüche 1 - 6, wobei die mindestens eine Trimmstruktur (35) der Widerstandsstruktur (30) mindestens einen Bereich aufweist, in dem ein Teil der mindestens einen Trimmstruktur (35) durchtrennt ist oder in dem Material teilweise abgetragen ist.

8. Sensorelement gemäß einem der Ansprüche 1 - 7, wobei die mit dem anisotrop leitfähigen Material (40) bedeckte mindestens eine Trimmstruktur (35) nicht von mindestens einer weiteren Passivierungsschicht oder einer Abdeckschicht zumindest teilweise bedeckt ist.

9. Sensorelement gemäß einem der Ansprüche 1 - 8, wobei mindestens ein Kontaktpad (20, 20`) mindestens ein Kontaktpatch (21, 21`) aufweist, wobei das mindestens eine Kontaktpatch (21, 21') eine Fläche von 0,01 mm² oder weniger aufweist und /oder der Abstand von Kante zu Kante zweier direkt benachbarter Patches auf einem Kontaktpad höchstens 300 µm beträgt.

10. Sensorelement gemäß einem der Ansprüche 1 - 9, wobei der elektrisch isolierende Träger des Sensorchips flexibel ist.

11. Sensorelement gemäß einem der Ansprüche 1 - 10, wobei die erste Seite des Sensorchips eine Fläche aufweist, die höchstens 1 mm² beträgt und/oder der Sensorchip eine Dicke von höchstens 200 µm aufweist.

12. Sensormodul (5) aufweisend
a. ein Sensorelement (2), gemäß einem der Ansprüche 1 - 11, aufweisend einen Sensorchip (1) und ein anisotrop leitfähiges Material (40),
b. ein Substrat (60) aufweisend eine erste Oberfläche mit mindestens zwei darauf angeordneten Leiterstrukturen (70, 70`),
wobei das Sensorelement (2) auf dem Substrat (60), mit dem anisotrop leitfähigen Material (40) hin zur ersten Oberfläche des Substrats (60) angeordnet ist,
**dadurch gekennzeichnet, dass** zwischen den Kontaktpads (20, 20') des Sensorchips und den Leiterstrukturen (70, 70`) des Substrats (60) elektrisch leitfähige Verbindungen durch das anisotrop leitfähige Material (40) ausgebildet sind.

13. Sensormodul gemäß Anspruch 12, wobei das anisotrop leitfähige Material (40) die mindestens eine Trimmstruktur (35) zumindest teilweise oder vollständig bedeckt, insbesondere verschließt und ganz besonders bevorzugt hermetisch verschließt.

14. Sensormodul gemäß einem der Ansprüche 12 oder 13, wobei in dem Bereich zwischen den Kontaktpads (20, 20`) keine Strukturen anwesend sind, die höher sind als die kombinierte Höhe der Leiterstrukturen (70, 70') auf dem Substrat und der Kontaktpads (20, 20') mit optionalen Kontaktpatches (21, 21').

15. Verfahren zur Herstellung eines Sensormoduls (5), insbesondere gemäß einem der Ansprüche 12 - 14, aufweisend mindestens die folgenden Schritte:
f) Bereitstellen eines Substrats (60) aufweisend eine erste Oberfläche, wobei auf dieser ersten Oberfläche eine Leiterstruktur (70) angeordnet ist,
g) Bereitstellen eines Sensorchips (1) gemäß einem der Ansprüche 1-11,
h) Aufbringen eines anisotrop leitfähigen Materials (40) auf die erste Seite des elektrisch isolierenden Trägers (10) des Sensorchips (1) oder auf die erste Oberfläche des Substrats (60),
i) Positionieren des Sensorchips (1) auf dem Substrat (60), sodass die Widerstandsstruktur (30) zum Substrat hin orientiert ist und das anisotrop leitfähige Material (40) zwischen dem Sensorchip (1) und dem Substrat (60) vorliegt, und
j) Herstellen elektrisch leitfähiger Verbindungen zwischen den Kontaktpads (20, 20`) des Sensorchips und den Leiterstrukturen (70, 70`) des Substrats (60) durch das anisotrop leitfähige Material (40).

16. Verfahren gemäß Anspruch 15, wobei das anisotrop leitfähige Material (40) die mindestens eine Trimmstruktur (35) zumindest teilweise oder vollständig verschließt.

17. Verfahren gemäß einem der Ansprüche 15 oder 16, wobei der Sensorchip in Schritt b) im Bereich der mindestens einen Trimmstruktur (35) eine Trimmstelle (36) aufweist.

## Claims

1. A sensor element (2) having a sensor chip (1) and an anisotropically conductive material (40), wherein the sensor chip (1) has
a. an electrically insulating carrier (10) comprising a first side and a second side lying opposite the first side,
b. at least two contact pads (20, 20') arranged on the first side of the electrically insulating carrier (10), and
c. a resistance structure (30) on the first side of the electrically insulating carrier (10), which extends from a first contact pad (20) to at least one additional contact pad (20'), wherein the resistance structure contains at least one trim structure (35),
**characterized in that** an anisotropically conductive material (40) is arranged on the first side of the electrically insulating carrier (10), at minimum on at least the one trim structure (35).

2. The sensor element according to claim 1, wherein the resistance structure (30) is at least partially or completely covered with an insulating layer (50) at minimum in the area outside of the at least one trim structure (35).

3. The sensor element according to one of claims 1 or 2, wherein the insulating layer (50) does not at least partially cover the at least one trim structure (35).

4. The sensor element according to one of claims 1 to 3, wherein the insulating layer (50) contains a dielectric material selected from the group consisting of polymers, glass, ceramics, and glass ceramics.

5. The sensor element according to one of claims 1 to 4, wherein the surface of the resistance structure (30) of the sensor chip (1) is at least partially coated with a first inorganic passivation layer, wherein the first inorganic passivation layer preferably has an oxide, a nitride, or an oxide-nitride composite material.

6. The sensor element according to one of claims 1 to 5, wherein the anisotropically conductive material (40) is selected from the group containing anisotropically conductive two-component adhesives, anisotropically conductive one-component adhesives, anisotropically conductive hot melt adhesives and anisotropically conductive films, and wherein the anisotropically conductive material contains deformable or nondeformable electrically conductive particles.

7. The sensor element according to one of claims 1 to 6, wherein the at least one trim structure (35) of the resistance structure (30) has at least one area in which a portion of the at least one trim structure (35) is cut through or partially removed in the material.

8. The sensor element according to one of claims 1 to 7, wherein the at least one trim structure (35) coated with the anisotropically conductive material (40) is not at least partially coated by at least one additional passivation layer or a cover layer.

9. The sensor element according to one of claims 1 to 8, wherein at least one contact pad (20, 20') has at least one contact patch (21, 21'), wherein the at least one contact patch (21, 21') has a surface area of 0.01 mm² or less, and/or the distance from edge to edge between two directly adjacent patches on a contact pad measures at most 300 µm.

10. The sensor element according to one of claims 1 to 9, wherein the electrically insulating carrier of the sensor chip is flexible.

11. The sensor element according to one of claims 1 to 10, wherein the first side of the sensor chip has a surface area that measures at most 1 mm² and/or the sensor chip has a thickness of at most 200 µm.

12. A sensor module (5), with
a. a sensor element (2) according to one of claims 1 to 11, with a sensor chip (1) and an anisotropically conductive material (40),
b. a substrate (60) having a first surface with at least two conductor structures (70, 70') arranged thereupon,
wherein the sensor element (2) is arranged on the substrate (60) with the anisotropically conductive material (40) toward the first surface of the substrate (60),
**characterized in that** electrically conductive connections are formed between the contact pads (20, 20') of the sensor chip and the conductor structures (70, 70') of the substrate (60) via the anisotropically conductive material (40).

13. The sensor module according to claim 12, wherein the anisotropically conductive material (40) at least partially or completely coats, in particular seals, and very especially preferably hermetically seals, the at least one trim structure (35).

14. The sensor module according to one of claims 12 or 13, wherein no structures are present in the area between the contact pads (20, 20') that are higher than the combined height of the conductor structures (70, 70') on the substrate and the contact pads (20, 20') with optional contact patches (21, 21').

15. A method for manufacturing a sensor module (5), in particular according to one of claims 12 to 14, comprising at least the following steps:
f) Providing a substrate (60) having a first surface, wherein a conductor structure (70) is arranged on this first surface,
g) Providing a sensor chip (1) according to one of claims 1 to 11,
h) Applying an anisotropically conductive material (40) to the first side of the electrically insulating carrier (10) of the sensor chip (1) or on the first surface of the substrate (60),
i) Positioning the sensor chip (1) on the substrate (60), so that the resistance structure (30) is oriented toward the substrate, and the anisotropically conductive material (40) is present between the sensor chip (1) and the substrate (60), and
j) Establishing electrically conductive connections between the contact pads (20, 20') of the sensor chips and the conductor structures (70, 70') of the substrate (60) via the anisotropically conductive material (40).

16. The method according to claim 15, wherein the anisotropically conductive material (40) at least partially or completely seals the at least one trim structure (35).

17. The method according to one of claims 15 or 16, wherein the sensor chip in step b) has a trim point (36) in the area of the at least one trim structure (35).

## Revendications

1. Élément capteur (2), comportant une puce de capteur (1) et une matière conductrice (40) anisotrope, la puce de capteur (1) comportant,
a. un support (10) isolant électrique, comportant une première et une deuxième face, opposée à la première face,
b. au moins deux bornes de contact (20, 20'), placées sur la première face du support (10) isolant électrique et
c. une structure de résistance (30) sur la première face du support (10) isolant électrique, qui s'étend d'une première borne de contact (20) vers au moins une borne de contact (20') supplémentaire, la structure de résistance comprenant au moins une structure d'ajustage (35),
**caractérisé en ce que** sur la première face du support (10) isolant électrique est placée au moins sur l'au moins une structure d'ajustage (35) une matière conductrice (40) anisotrope.

2. Élément capteur selon la revendication 1, au moins dans la zone extérieure à l'au moins une structure d'ajustage, la structure de résistance (30) étant recouverte (35) au moins partiellement ou totalement d'une couche isolante (50).

3. Élément capteur selon l'une quelconque des revendications 1 ou 2, la couche isolante (50) ne recouvrant pas au moins partiellement l'au moins une structure d'ajustage (35).

4. Élément capteur selon l'une quelconque des revendications 1 à 3, la couche isolante (50) comprenant une matière diélectrique, qui est sélectionnée dans le groupe composé des polymères, des verres, des céramiques et des vitrocéramiques.

5. Élément capteur selon l'une quelconque des revendications 1 à 4, la surface de la structure de résistance (30) de la puce de capteur (1) étant revêtue au moins partiellement d'une première couche de passivation inorganique, la première couche de passivation inorganique comportant de préférence un oxyde, un nitrure ou un matériau composite oxydenitrure.

6. Élément capteur selon l'une quelconque des revendications 1 à 5, la matière conductrice (40) anisotrope étant sélectionnée dans le groupe comprenant des adhésifs conducteurs bicomposants anisotropes, des adhésifs conducteurs monocomposants anisotropes, des adhésifs conducteurs thermofusibles anisotropes et des films conducteurs anisotropes, la matière conductrice anisotrope comprenant des particules conductrices électriques déformables ou indéformables.

7. Élément capteur selon l'une quelconque des revendications 1 à 6, l'au moins une structure d'ajustage (35) de la structure de résistance (30) comportant au moins une zone dans laquelle une partie de l'au moins une structure d'ajustage (35) est sectionnée ou dans laquelle de la matière est partiellement enlevée.

8. Élément capteur selon l'une quelconque des revendications 1 à 7, l'au moins une structure d'ajustage (35) recouverte de la manière conductrice (40) anisotrope n'étant pas recouverte au moins partiellement d'au moins une couche de passivation supplémentaire ou d'une couche de recouvrement.

9. Élément capteur selon l'une quelconque des revendications 1 à 8, au moins une borne de contact (20, 20') comportant au moins un patch de contact (21, 21'), l'au moins un patch de contact (21, 21') présentant une surface de 0,01 mm² ou moins et / ou l'écart de bord à bord de patchs directement voisins sur une borne de contact étant d'au plus 300 µm.

10. Élément capteur selon l'une quelconque des revendications 1 à 9, le support isolant électrique de la puce de capteur étant souple.

11. Élément capteur selon l'une quelconque des revendications 1 à 10, la première face de la puce de capteur comportant une surface qui s'élève au plus à 1 mm² et / ou la puce de capteur présentant une épaisseur d'au plus 200 µm.

12. Module de capteur (5), comportant
a. un élément capteur (2), selon l'une quelconque des revendications 1 à 11, comportant une puce de capteur (1) et une matière conductrice (40) anisotrope,
b. un substrat (60) comportant une première surface pourvue d'au moins deux structures conductrices (70, 70') placées sur celle-ci,
l'élément capteur (2) étant placé sur le substrat (60), avec la matière conductrice (40) anisotrope placée vers la première surface du substrat (60),
**caractérisé en ce qu'**entre les bornes de contact (20, 20') de la puce de capteur et les structures conductrices (70, 70') du substrat (60), des connexions conductrices électriques sont conçues à travers la matière conductrice (40) anisotrope.

13. Module de capteur selon la revendication 12, la matière conductrice (40) anisotrope recouvrant au moins partiellement ou totalement, fermant notamment et de manière particulièrement préférentielle, fermant hermétiquement l'au moins une structure d'ajustage (35) .

14. Module de capteur selon l'une quelconque des revendications 12 ou 13, dans la zone entre les bornes de contact (20, 20') n'étant présente aucune structure qui est plus haute que la hauteur associée des structures conductrices (70, 70') sur le substrat et des bornes de contact (20, 20') pourvues de patchs de contact (21, 21') optionnels.

15. Procédé, destiné à confectionner un module de capteur (5), notamment selon l'une quelconque des revendications 12 à 14, comportant au moins les étapes suivantes, consistant à:
f) mettre à disposition un substrat (60) comportant une première surface, sur ladite première surface étant placée une structure conductrice (70),
g) mettre à disposition une puce de capteur (1) selon l'une quelconque des revendications 1 à 11,
h) appliquer une première matière conductrice (40) anisotrope sur la première face du support (10) isolant électrique de la puce de capteur (1) ou sur la première surface du substrat (60),
i) positionner la puce de capteur (1) sur le substrat (60), de telle sorte que la structure de résistance (30) soit orientée vers le substrat et que la matière conductrice (40) anisotrope se présente entre la puce de capteur (1) et le substrat (60) et
j) confectionner des connexions conductrices électriques entre les bornes de contact (20, 20') de la puce de capteur et les structures conductrices (70, 70') du substrat (60) à travers la matière conductrice (40) anisotrope.

16. Procédé selon la revendication 15, la matière conductrice (40) anisotrope fermant au moins partiellement ou totalement la structure d'ajustage (35) .

17. Procédé selon l'une quelconque des revendications 15 ou 16, la puce de capteur comportant à l'étape b) dans la zone de l'au moins une structure d'ajustage (35) un point d'ajustage (36).
